# EUROPEAN PATENT APPLICATION

(11) **EP 1 394 029 A2**
(43) Date of publication of application: **03.03.2004**
(21) Application number: 03255078.2
(22) Date of filing: 15.08.2003
(51) Int. Cl.: B62J 6/00, B62J 6/02, B62J 6/04

(54) **Bicycle lighting system**

(30) Priority: 16.08.2002 GB 0219169
(71) Applicant: C-Tronic Designs Limited, Brislington, Bristol BS4 5QW (GB)
(72) Inventor: Banwell-Clode, Paul, Bristol, BS4 5AW (GB)
(74) Representative: Calderbank, Thomas Roger

(57) **Abstract**

A bicycle lighting system which has front and rear units which are detachably mountable in the bicycle. The front circuit has a casing with left and right indicator panels (4a, 4b) and a front light panel (3). The rear unit also has a casing with left and right indicator panels (4a, 4b) and a rear light panel (3). The controls (15, 16, 17a, 17b) for the system are on the front unit and there is a transmitter in the front unit which transmits an electromagnetic indication signal to the rear unit to enable the lights of both units to be controlled from the front unit.

## Description

The present invention relates to lights for a bicycle. Particularly, but not exclusively, the invention concerns battery-powered light-emitting diode (LED) lights for mounting on the front and rear of a bicycle.

Bicycle lighting systems are known which comprise a front unit illumination light and a rear unit illumination light for mounting on the front and rear of a bicycle, respectively. The system normally also provides mounting apparatus for attaching the units to the bicycle. Typically, each unit comprises a light bulb, a compartment for a battery, and a plastic casing which houses the bulb and battery compartment.
Transparent casing covers the bulb, and may have light-scattering properties to refract light from the bulb. For a rear unit light, the transparent casing is normally red. Wires connect a battery in the battery compartment to the bulb and a switch, forming an electric circuit. When the switch is in an 'on' position, current from the battery flows through the bulb, causing it to light up. The light is turned off by returning the switch to an 'off' position. The casing is openable to allow access to the battery compartment for removing or inserting a battery.

Other bicycle lighting units are known in which a light-emitting diode (LED) is used instead of the bulb. In this type of unit, electronic circuitry connects the LED to a control, e.g. a button or switch. Operation of the control turns the LED on and off. There may also be further 'modes' of operation, e.g. pressing a control button a number of times may cause the LED to turn on, flash repeatedly, and turn off, respectively. If a unit comprises multiple LEDs, more complex modes of operation are possible in which light patterns are formed by different LEDs turning on and off at different times.

Bicycle lights comprising LEDs typically require less battery power than the bulb type, and are consequently often smaller and lighter because they are made to contain smaller or fewer batteries.

Bicycle lighting systems increase the safety of cycling at night because they allow a bicycle to be seen. Other road users are thus made aware of the presence of a cyclist whom they might otherwise not see in time to avoid crashing into. The front light also provides light for the cyclist to see the route ahead.
Inconveniently, however, a cyclist must reach backwards in order to switch on a rear light, or must first stop and dismount.

Cyclists use arm signals to indicate that they are turning left or right. These are poorly visible, if at all, when cycling at night. This makes it more difficult and hazardous for cyclists to turn off or into a road, because other road users are not aware of the cyclist's intention. Since cyclists normally cycle at the far left of the road (in the UK), it is particularly difficult to turn right because the cyclist must cross two lanes of traffic and may need to wait between the two, in the middle of the road.

Cars, motorbikes and other motorised vehicles have indicator lights positioned on the left and right hand sides of the front and back of the vehicle, and operated by the driver from a control on the dashboard. The control is connected to the indicator lights by an electric circuit powered by the car's battery. A driver wishing to turn left operates the left indicator switch, causing the indicator lights on the front left and back left of the car to flash repeatedly. The signal is recognised by other road users and pedestrians. When the driver has completed the left turn, he switches off the indicator button. Cars have also been developed in which the indicator is switched off automatically when the steering wheel turns in the opposite direction (i.e. when the indicated turn has been completed).

It would be relatively impractical for a cyclist to have front and rear indicator lights connected by an electric circuit as used in a car, because this would require wiring between the front and back lights, making the system bulky and difficult to mount and remove from the bicycle. Since many cyclists remove their lights after use, wired indicator lights may be too impractical for routine use. The wires would also be exposed to the elements or physical damage.

On the other hand, the use of separately operated front and rear lights would require the cyclist to reach backwards to operate the rear indicator. Operation in this way could destabilise and slow down the cyclist. Such a system may be too impractical for use. Furthermore, it would be easy for the cyclist to forget to switch the rear indicator off again after use.

In cars and other motorised vehicles, wiring connects the foot brake mechanism to brake lights on the rear of the vehicle. The brake lights light up when the brake pedal is activated.

Application of such a system to a bicycle would require wiring from the brakes on the handlebars to a light on the rear of the bicycle. Again, such wiring would be impractical on a bicycle, especially where the lights are frequently removed.

### The Present Invention

At its most general, a first aspect of the present invention provides a bicycle lighting system having a front unit and a rear unit, the rear unit being remotely operable from the front unit via an electromagnetic radiation signal. A light on the rear unit is thus operable from the front unit. In normal use, the front unit is mounted on the front of a bicycle and the rear unit is mounted on the rear of the bicycle.

The front unit comprises a transmitter, controls, normally one or more lights, and electronic circuitry connecting the controls to the lights and transmitter. The rear unit comprises a receiver, one or more lights, and electronic circuitry connecting the receiver to the lights. Both units contain a power source or means of connection to a power source, e.g. each unit may have a compartment for a battery.

A light may be a right or a left indicator light, a brake light, or a front or rear illumination light. A light according to the present invention preferably comprises a light emitting diode (LED), and may comprise two or more LEDs for increased brightness.

Operation of a control by the user provides an input to the electronic circuitry. Processing of the input by the electronic circuitry causes a light on the front unit to operate, and/or causes the transmitter in the front unit to emit a signal in the form of electromagnetic radiation (e.g. a radio frequency signal). The signal is detected in the rear unit by the receiver and transduced into an input for the electronic circuitry of the rear unit, resulting in operation of a rear unit light.

The present invention therefore permits the simple and convenient operation of front and rear lights, including illumination lights, indicator lights and brake lights, while cycling. In particular, the present invention allows lights on the rear unit to be operated without the user having to reach backwards, and without the need for wiring between the front and rear units.

The present invention may further include a means for a front and a rear light to be operated from a single control. Thus, operation of an indicator control may cause both a front and a rear indicator light to operate, the rear light being operated through an electromagnetic radiation signal emitted by the front unit. Use of the present bicycle lighting system should increase the safety of cycling, particularly in the dark when cyclists are otherwise poorly visible and arm signals cannot be seen. While the present invention is particularly useful for mounting on bicycles, it is also suitable for mounting on other (especially non-motorised) forms of transport or attaching to a person's clothing.

Each unit normally comprises a casing for mounting and protecting the other components. The casing is preferably waterproof, e.g. it may be of plastics material. Where the casing covers a light, it is transparent or translucent. Preferably, said casing is red where it covers a rear illumination light or brake light, colourless where it covers a front illumination light, and yellow or orange where it covers an indicator light. The casing may comprise a reflective or light-scattering panel for increasing visibility of the unit.

The use of a casing for mounting and protecting the components of the lighting system has been discussed above in the context of the first aspect of the invention. However, a cycle lighting unit having casing which are mounted indicator lights and a front or rear light represents a second, independent, aspect of the present invention. In the second aspect, the unit comprising the lights and casing is a self-contained component which is mountable on bicycle or other form of transport. Where such a unit is to be the front unit e.g. for a bicycle, the casing will also have control buttons for operating the lighting. Other features of this aspect may be similar to those of the first aspect.

Other features applicable to both aspects will now be described.

The bicycle lighting system of the first or second aspect of the present invention may further comprise mounting apparatus for attaching the units to a bicycle or to a person's clothing. The mounting apparatus may comprise a clip. All or part of the mounting apparatus may be integral with the casing.

In the normal operating position, the front and rear units are located in front of and behind the user (e.g. cyclist), respectively. Front sides of the front and rear units face away from the user, while back sides of the front and rear units face towards the user in the normal operating position. Left and right sides of the units are towards the user's left- and right-hand sides, respectively, in the normal operating position.

Lights are located on the front of a unit, so that the lights face outwards from the user when the system is in the operating position.

Right and left indicator lights are normally located at right and left positions on the units, respectively. Since the diameter of the unit may be relatively small, an indicator light preferably forms, illuminates silhouettes the shape of an arrow, triangle or other directional shape, to further indicate the intended direction. The arrow or other shape may be comprised in the transparent casing in front of the light, such that the shape is lit up when the light is on. Thus, a left and a right indicator light may together illuminate a pair of arrows pointing away from one another and towards the left and right of the unit. In some cases, the left and right indicator lights may be distinguished only or mainly by the shape of the light, rather than by their position. Both left and right indicator lights will normally be included in the back unit, and are preferably also included in the front unit.

The controls preferably comprise buttons and/or switches for manual operation by the user. The controls may comprise a button for each type of light, e.g. there may be a right indicator button, a left indicator button, a front illumination button and a rear illumination button. Alternatively, there may be a single button for both the front and rear illumination lights.

Preferably, an indicator light flashes on and off repeatedly when switched on. Front and rear illumination lights preferably emit a steady light when switched on. Alternatively, they may flash on and off repeatedly. A light may have different modes, e.g. whereby operating a control once results in the light being steadily lit, operating the control a second time results in the light flashing repeatedly, and operation of the control a third time switches the light off.

A unit may comprise electronic circuitry connecting a control to a 'control' LED. Operation of a control may then result in that control becoming specifically lit by the control LED. Alternatively, control LEDs may be continually lit when the unit is on, e.g. switching on the front illumination light may cause all control LEDs to be illuminated. Operation of another control may then result in the corresponding control LED changing to a flashing mode. Control LEDs may be positioned inside control buttons, so that the buttons themselves are illuminated.

The rear unit optionally comprises a brake light which lights up only when a brake is engaged. The controls of the front unit may therefore comprise a brake sensor connectable to the bicycle brake lever and brake cable, and a connecting part. Operation of the brake lever generates a signal in the brake sensor, which transmits a signal through the connecting part to electronic circuitry of the front unit. Processing of the signal by the electronic circuitry causes the transmitter to emit an electromagnetic radiation signal. When the electromagnetic signal is received by the receiver in the rear unit, it is transduced back to an electronic input which, when processed by the electronic circuitry of the rear unit, causes the brake light to light. Releasing the brake lever terminates the signal in the brake sensor. The electromagnetic radiation signal is therefore not transmitted and the brake light no longer lights up.

Preferably, the brake light sensor comprises a reed switch and a magnet. The connecting part preferably comprises a wire ending in a right-angled stereo jack plug, which jack plug is fittable into the casing on the back of the front unit. The reed switch and magnet are preferably housed in plastic and attachable by Velcro to the brake cable housing and brake lever, respectively. When the brake lever is pulled it travels away from the cable housing. Thus, operation of the brake causes the magnet to travel away from the Reed switch, creating a signal which is sent to the front unit transmitter. The front unit then sends a signal to the rear unit by way of electromagnetic radiation. The rear unit receives the signal and activates a rear brake light, preferably comprising a circle of LEDs. Said LEDs may also function as a rear illumination light. Should the LEDs be in a rotating or blinking mode when the brake is applied, they will change to a solid circle of lights. When the brake lever is released the magnet travels towards the Reed switch, so stopping the signal and the LEDs return to their previous illuminations. Should the brake be activated but the rear illumination light not switched on then the complete circle will illuminate until the cyclist releases the brake.

The electronic circuitry of the front or preferably the rear unit may comprise a buzzer which sounds when the brake is engaged.

The bicycle lighting system of the present invention optionally comprises multiple front and rear units. For example, it may comprise a single front unit and two rear units, the first rear unit having a brake light and the second rear unit having indicator lights.

The bicycle lighting system may also comprise further units. For example, there may be a further unit comprising a receiver, a light and electronic circuitry connecting the receiver to the light. Said light may be a front illumination light for mounting on the front of a bicycle, said further unit being operable from the front unit in a manner analogous to the operation of the rear unit from the front unit. Alternatively, said light may be a right or left indicator light for mounting on the left or right of a bicycle. Thus, the right and left indicator lights may not form part of a single unit, allowing them to be mounted at separate locations.

Embodiments of the invention will now be described, with reference to the drawings, in which:
**Figure 1a** illustrates an embodiment of a rear unit, viewed from the front side;
**Figure 1b** illustrates the back portion of the rear unit, containing the battery compartment, viewed from the back and with the cover to the battery compartment lifted off;
**Figure 1c** illustrates an embodiment of a front unit, viewed from the front side;
**Figure 1d** illustrates the back of the front unit with the cover to the battery compartment removed;
**Figure 2** illustrates disassembled components of the rear unit embodiment shown in Figure 1a and 1b;
**Figure 3** illustrates disassembled components of an alternative embodiment of a rear unit;
**Figure 4** illustrates the front unit shown in Figures 1c and 1d, seen from the front with an outer part of the casing removed;
**Figure 5** illustrates the back of the front unit shown in Figure 4;
**Figure 6** illustrates disassembled components of the front unit shown in Figures 1c, 1d, 4 and 5;
**Figure 7** is a circuit diagram of the logic components of a front unit;
**Figure 8** is a circuit diagram illustrating the lights of a front or rear unit; and
**Figure 9** is a circuit diagram of a transmitter/receiver for the front or rear unit.

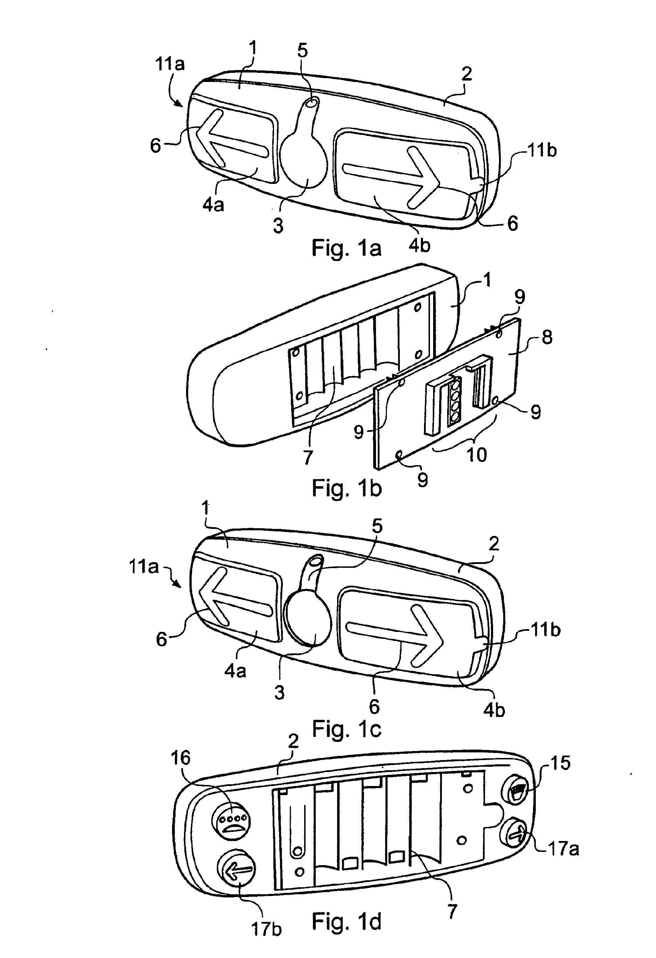

The embodiment shown in Figure 1a is a rear unit viewed from the front side. The unit is approximately cuboid but the edges and corners are rounded and the front and back sides are slightly convex. The unit has a plastic casing comprising a front casing 1 and a back casing 2. The front casing 1 comprises three transparent panels that occupy most of the front of the unit. The rest of the casing is opaque. A central panel 3 is circular with an elongated part 5 and covers a brake light and/or rear illumination light. Right and left front panels 4a and 4b are approximately rectangular with an elongated part 11a and 11b at the right or left side respectively, and cover the right and left indicator lights. The right and left front panels 4a and 4b are each marked by an arrow shape 6 pointing lengthways from the centre of the unit. The central panel 3 is red, and the right and left panels 4a and 4b are orange.

Figure 1(b) shows the back casing 2 of this embodiment. The back casing 2 is moulded to form a battery compartment 7 into which batteries (not shown) fit snugly and make electrical contact with the front unit. Part of the back casing 2 comprises a removable cover 8 for the battery compartment 7. The cover 8 has holes 9 for it to be attached over the battery compartment 7 with screws. The outside of the cover 8 comprises part 10 of a mounting apparatus.

Figure 1(c) shows an embodiment of a front unit viewed from the front side. It is externally similar to the rear unit of figure 1a, having a front casing 1, a back casing 2, a central front transparent panel 3 having an elongated part 5, right and left front panels 4a and 4b each marked with an arrow shape 6. The right and left panels, 4a and 4b, cover the right and left indicator lights respectively and are orange. The central panel 3 covers a front illumination light and is colourless.

Figure 1d shows the back of this embodiment. Part of the back casing 2 corresponding to the cover for the battery compartment 7 has been removed. Control buttons extend through the back of the casing. These are:
on the top right, a front illumination light control button 15 (white);
on the top left, a rear illumination light control button 16 (red);
on the bottom right, a right indicator light control button 17a (yellow) marked with an arrow pointing to the right of the unit; and
on the bottom left, a left indicator light control button 17b (yellow) marked with an arrow pointing to the left of the unit.

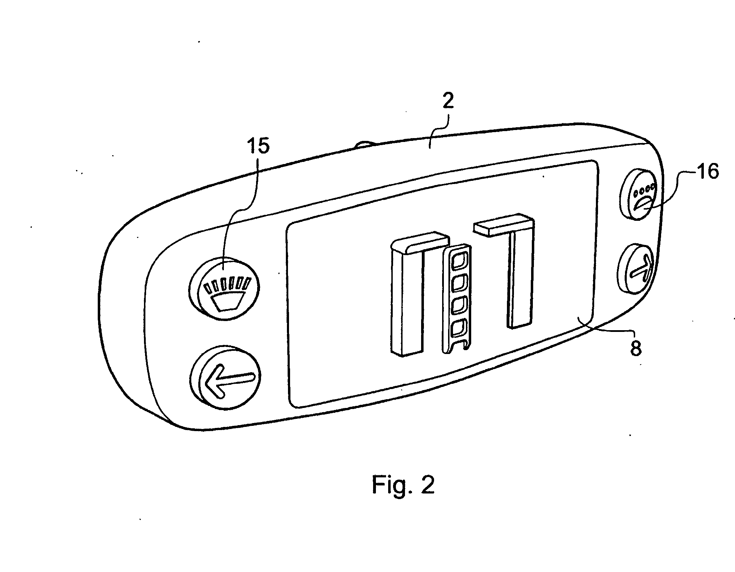

Figure 2 shows the back of a front unit similar to that of figure 1d but with the cover 8 attached. In this embodiment, the positions of the front and rear illumination light control buttons 15 and 16 are reversed.

In one embodiment, the system may be operated as follows:

To determine how the indicators and rear LEDs will function, the unit has to be switched on. A switch may be provided on the front and rear units. Alternatively, the user presses and holds down both indicator buttons at the same time for approximately three seconds. The first time will allow and on/off function and both indicator buttons will flash on and off for approximately 4 seconds, or until the buttons are pressed a second time and then the sequential function has been chosen, the buttons will then flash alternatively: left indicator button, then the right indicator button, left indicator button, right indicator button and so on, again for about 4 seconds.

To activate and deactivate the front illumination light, the cyclist pushes the front illumination light control button 15, once to switch the light on and a second time to switch it off. When the front illumination light is switched on, all four control buttons 15, 16, 17a and 17b will be illuminated, preferably by control LEDs, to allow the cyclist to see the buttons clearly during night-time cycling.

To activate the indicator lights, the cyclist pushes one of the indicator control buttons 17a or 17b. Once the cyclist has completed the manoeuvre, they simply push the indicator button a second time to stop indicating.

To operate the rear light, the rear illumination light control button 16 is pressed which will activate the rear light (e.g. appropriate LEDs). By pressing the button 16 once, the rear light may be activated in the flashing mode, although it is imperative there are also side facing LEDs which are static. If the button 16 is pressed a second time, the rear lights may be activated in a rotational mode, and pressing a third time may activate the rear light in a static mode. The button 16 is then pressed a fourth time, the rear light is turned off.

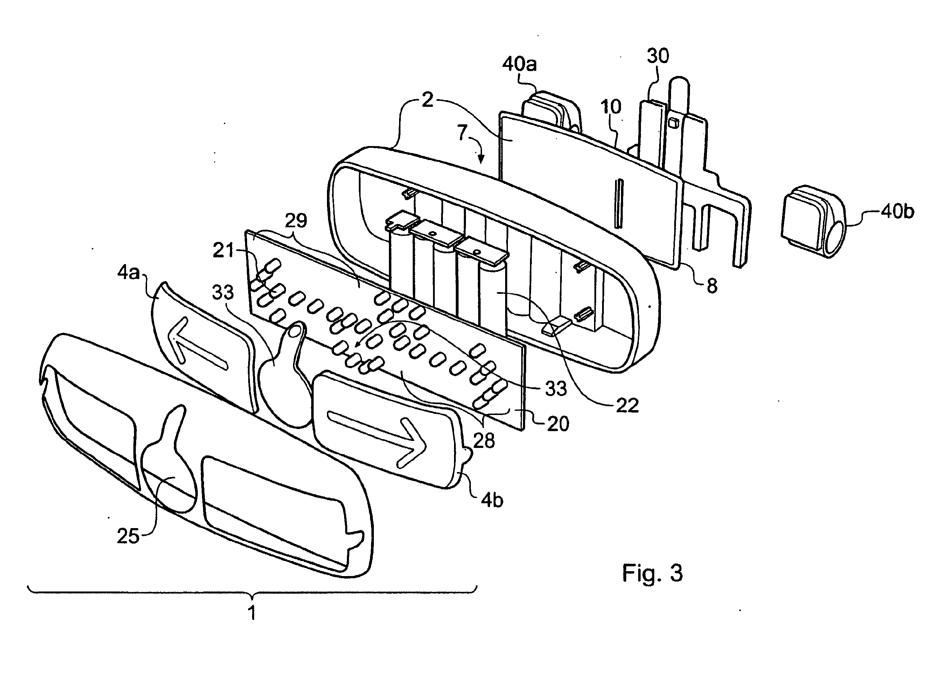

Figure 3 shows the rear unit embodiment of Figures 1a and 1b with its components and batteries separated out. The front casing 1 is shown with a circular central hole 25 and a left and right rectangular hole where transparent panels 3, 4a and 4b have been separated from the opaque part of the casing. Also shown are batteries 22, the back casing 2 including the cover 8 for the battery compartment 7, and mounting apparatus composed of parts 10 (integral with cover 8), 30, 40a and 40b. A circuit board 20 is between the front casing 1 and the back casing 2, and has LEDs 21 forming the lights. On the circuit board, nine LEDs form a left indicator light 28 in the shape of an arrow pointing to the left of the unit. On the right hand side, nine LEDs form a symmetrical right indicator light 29 in the shape of an arrow pointing to the right of the unit. A circle of LEDs in the centre of the circuit board form a rear light 33 comprising a brake light or rear illumination light.

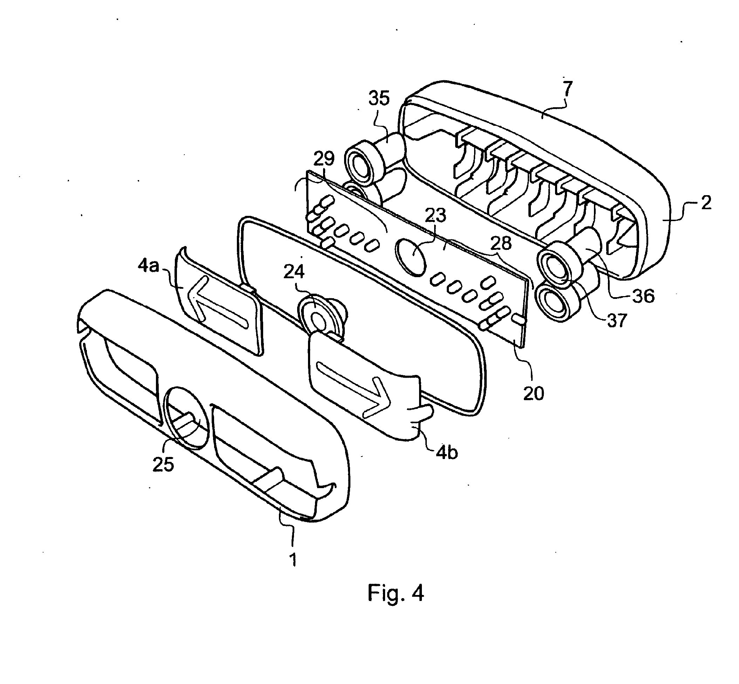

The embodiment shown in figure 4 is a front unit with its components separated out. Shown are a front casing 1 with a circular central hole 25 and a left and right approximately rectangular hole from which transparent panels 4a and 4b have been separated, and the back casing 2. Between the front and back casing is a circuit board 20 with two sets of nine LEDs mounted on it in the shape of a left and right arrow, comprising left and right indicator lights 28 and 29. The circuit board 20 has a central circular hole 23 for a front illumination light 24. The front illumination light 24 comprises a bulb (e.g. halogen bulb) and a cone-shaped reflective surface around the bulb. In the assembled condition, the front illumination light 24 fits through the hole 23 in the circuit board, with the mouth of the cone at the central hole in the front casing 1. The light 24 would be connected to a battery in the battery compartment 7 in the back casing 2. Four control buttons 35 are shown. Each control button has a cylindrical shape with a widened end 37. In the assembled condition, the thinner part 36 projects through the back casing to the back of the front unit and the widened end 37 communicates with the circuit board. Thus, when a control button 35 is pressed from the back of the unit, a light is operated.

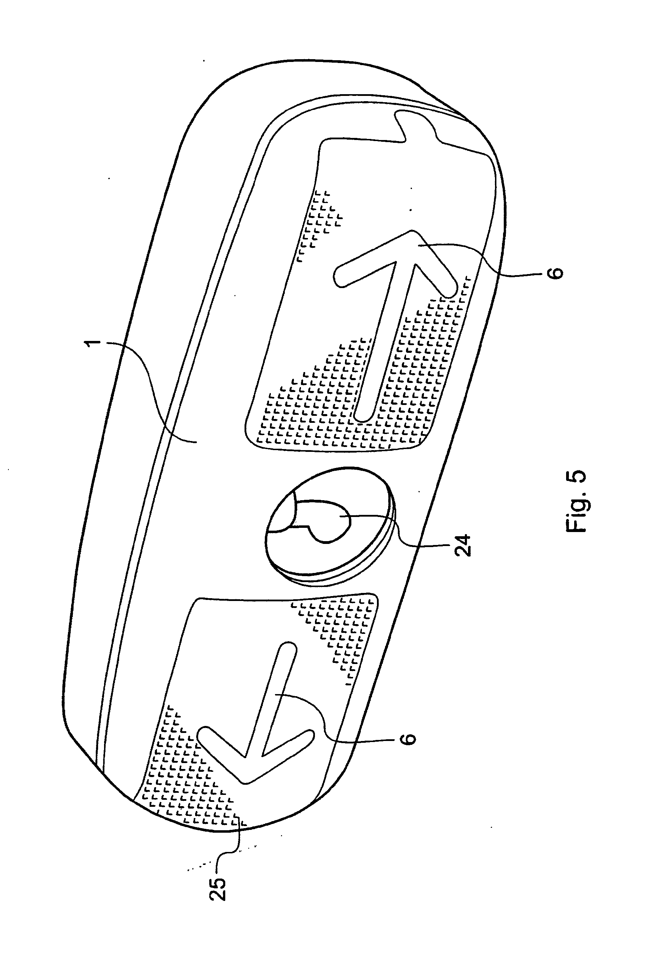

Figure 5 shows an assembled front unit. This embodiment is similar to that of figure 4, but in this embodiment all the front casing 1 is transparent. The front illumination light 24 is visible through the front casing 1. The front casing comprises arrow shapes 6 over the right and left indicator lights, and has light scattering properties owing to the internal refracting structure visible as a triangle pattern 25.

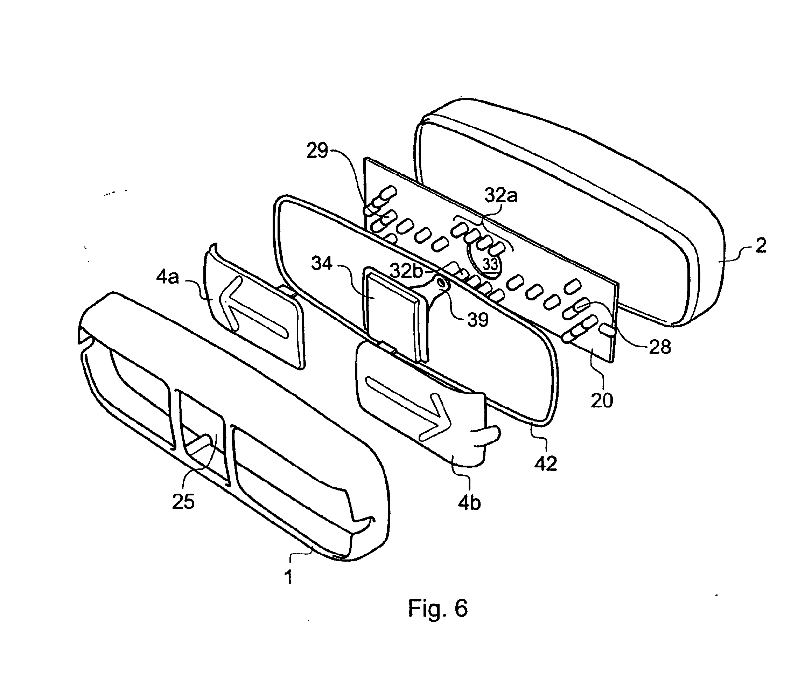

Figure 6 shows another embodiment of a rear unit, with its components separated out. The front casing 1, back casing 2 and circuit board 20 with left indicator light 28, right indicator light 29 and central circular hole 23 are shown as for the front unit embodied in figure 4. The rear unit of figure 6 has a square central hole 25 in the front casing and approximately rectangular holes corresponding to transparent panels 4a and 4b, which are shown separately. The circuit board 20 also has a row 32a of four red LEDs above and a row 32b of four red LEDs below the hole 23. A transparent panel 34 fits in front of the two rows 32a and 32b of LEDs. A part 39 of the panel 34 extends back through the hole 33 in the assembled condition. The front of the reflector 34 is square and fits into the square central hole 25 in the front casing 1 in the assembled condition. A strip of rubber 42 forms a seal between the front casing 1 and back casing 2 in the assembled condition.

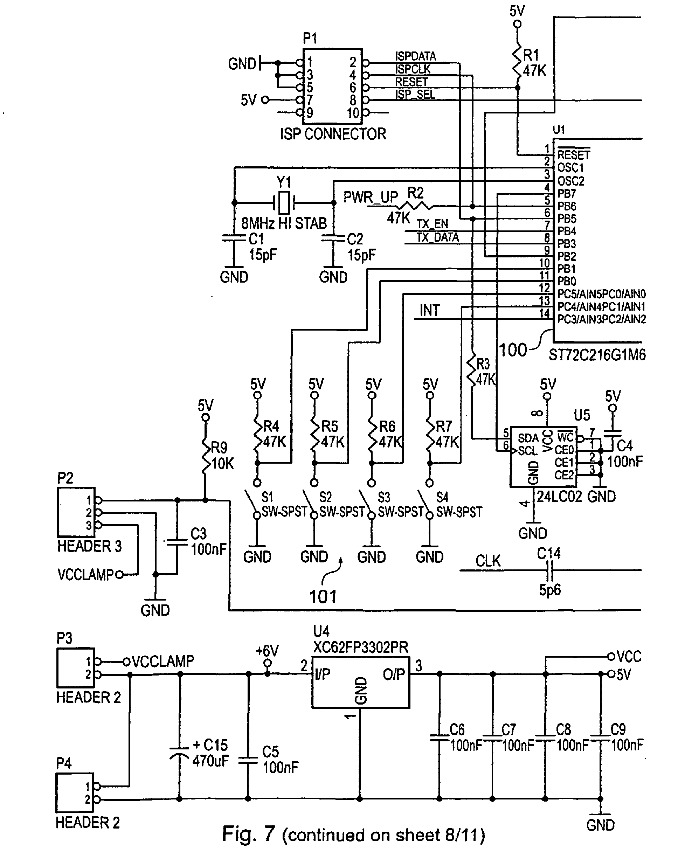

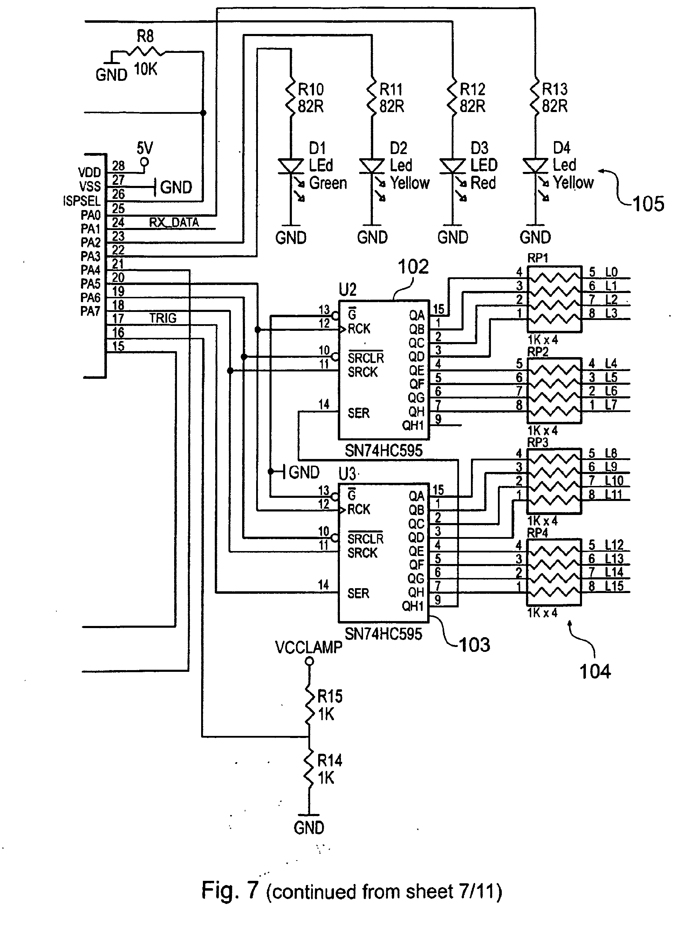

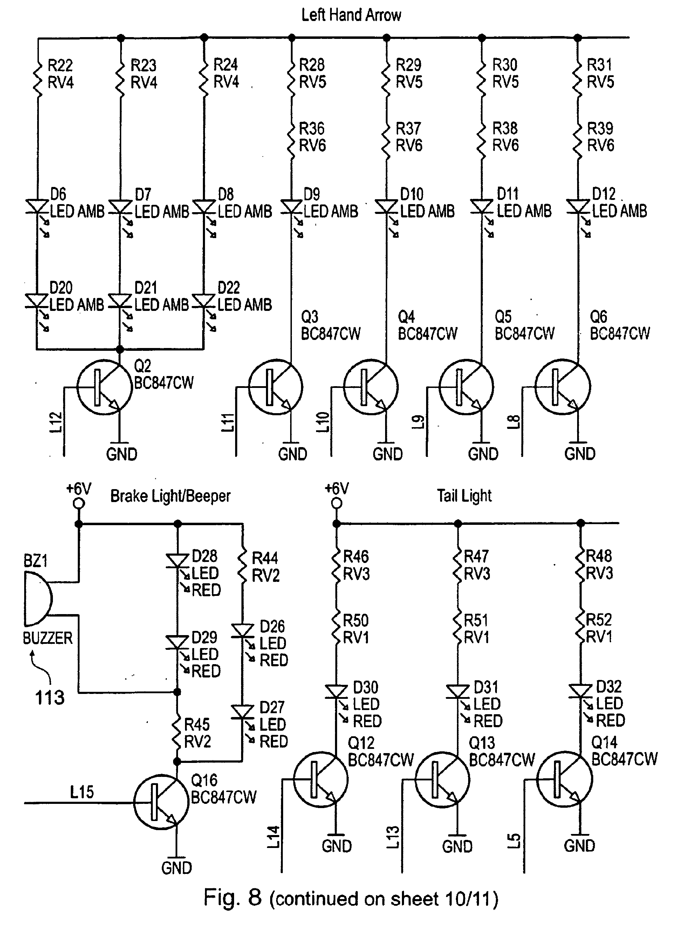

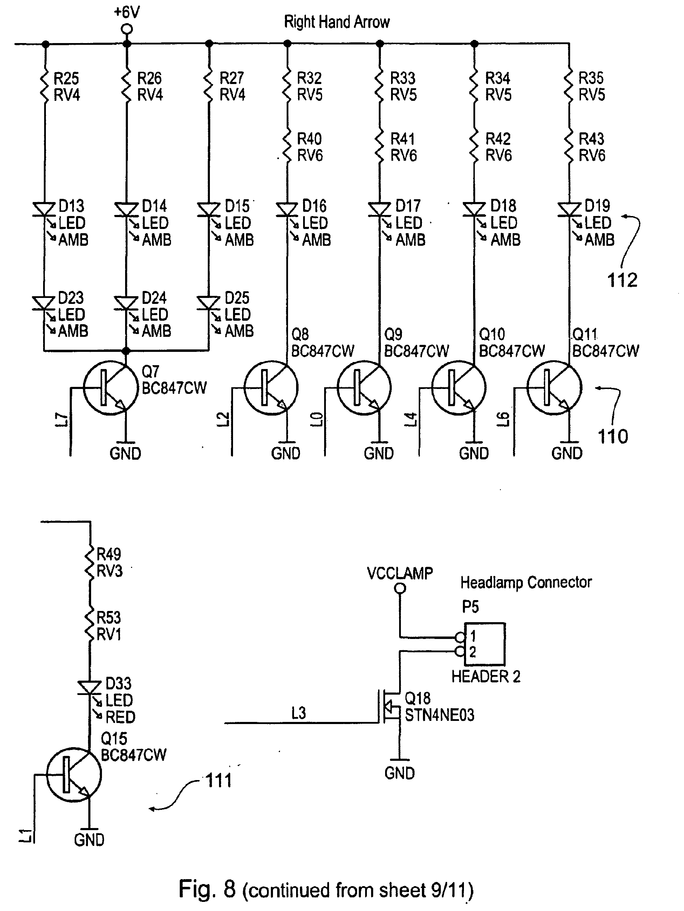

In one embodiment, the bicycle lighting system comprises the rear unit embodied in figure 6 and a front unit embodied in figures 1(d) or 2. The two horizontal rows 32a and 32b of LEDs in the rear light are activated by pressing the rear illumination light control button 16 on the front unit. The lower row 32b is designated as a rear illumination light and the upper row 32a is a brake light. To operate the system, as mentioned previously, the cyclist presses the rear illumination light control button 16 once to have the rear illumination light on static. Pressing the button 16 a second time causes the LEDs to light sequentially from left to right and back again. Pressing the button 16 a third time causes the LEDs to turn on and off in a blinking fashion. Pressing the button 16 a fourth time switches the rear illumination light off. Figure 7 illustrates a circuit diagram of the logic section of the front unit 1c and 1d. It has a microprocessor 100 which receives input from a bank of switches generally indicated at 101. Those switches correspond to the control buttons 15, 16, 17a and 17b in Figure 1d. These permit the user to input signals to the microprocessor 101. The microprocessor 100 outputs signals to processors 102, 103 which control switching outputs generally indicated at 104. Those switching outputs connect to the input of a series of transistors generally indicated at 110 and 111 in Figure 8. When transistors 110 are conductive, they cause the illumination of LEDs generally indicated at 112, corresponding to the LEDs 28, 29 in Figure 3. Similarly, the transistors 110 cause the illumination of the tail light and brake light and thus correspond to the LEDs 33 in Figure 3.

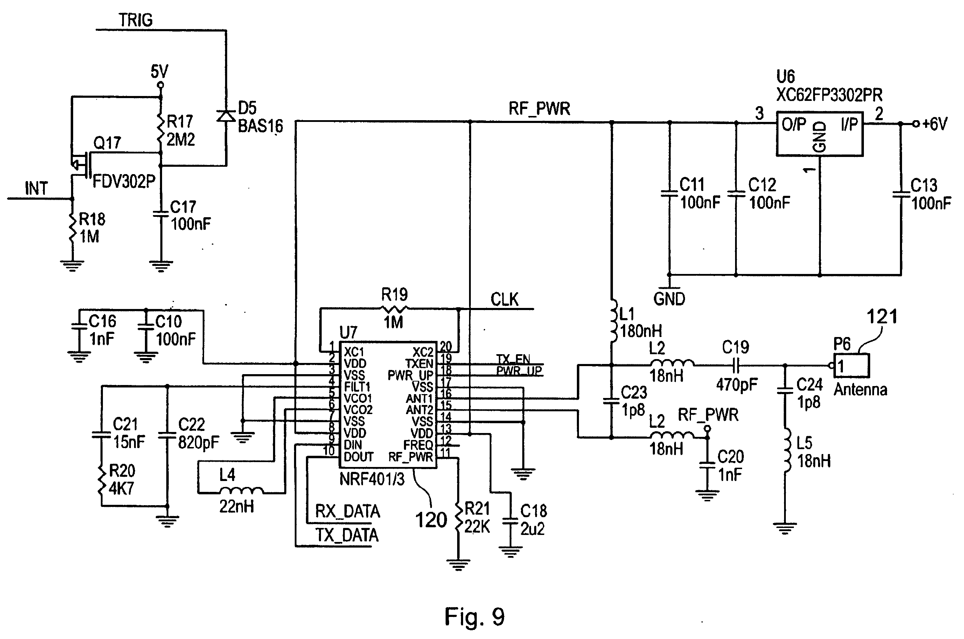

Figure 9 illustrates a further processor 120 the output of which controls an antenna 121. The processor 120 receives inputs TX EN and TX DATA from the processor 100, which causes the signals to be transmitted from the antenna 121 to the rear unit.

The logic components of the rear unit may then be substantially identical to those shown in Figure 9, except then the antenna 121 will receive signals which will be transmitted via the microprocessor 120 (as signals RX DATA) to the processor 100. The switching arrangement of Figure 8 may be the same for the rear unit.

Figures 7 also illustrates further LEDs 105 which are controlled by the processor 100 and may illuminate the control buttons 15, 16, 17a, 17b to make them visible at night, and to provide an illuminated indication to the user of the lights that are active.

Fig. 8 shows that there may be a buzzer 113 associated with the brake light to provide an audible warning of braking.

In order for the brake lights to operate, an appropriate switch needs to be provided which is connected to a brake handle of the bicycle, and an appropriate lead must be provided from the front unit. When the brake is operated, the microprocessor 100 generates signals to activate the rear light. In general, it is desirable that the LEDs of the rear light are all activated in a static mode, even if they were previously in a mode in which they flash.

The microprocessor 100 also may be programmed to monitor the battery level to give an audible warning prior to the battery supply failing. Since the main drain on the battery power is by illumination light 24, and thus it is desirable that when the battery power gets low, that light is extinguished and some (e.g. the inner most) LEDs of the front unit are illuminated to provide temporary illumination.

## Claims

1. A bicycle lighting system comprising a front unit and a rear unit, wherein:
the front unit has at least one light, at least one control for activating the at least one light, a transmitter for generating an electromagnetic radiation signal, and electrical circuitry interconnecting the at least one light, the at least one control and the transmitter,
the rear unit has at least one light, a receiver arranged to receive the electromagnetic radiation signal from the transmitter of the front unit, and electrical circuitry connecting the at least one light and the receiver;
whereby the or at least one control of the front unit is arranged to activate the at least one light of the rear unit via the transmitter and the receiver.

2. A lighting system according to claim 1, wherein each unit has a casing, containing at least the corresponding lights and the electrical circuitry of the respective unit.

3. A lighting system according to claim 2, wherein each casing contains a power source for powering the corresponding lights, electrical circuitry and transmitter/receiver.

4. A lighting system according to claim 2 or claim 3, wherein each casing has means for removably attaching the corresponding unit to the bicycle.

5. A lighting system according to any one of the preceding claims, wherein each unit has a plurality of lights.

6. A lighting system according to claim 5, wherein at least some of the lights of the front and rear units define right and left indicators.

7. A lighting system according to claim 6, wherein the front unit includes a headlight between the right and left indicators of that unit.

8. A lighting system according to claim 6 or claim 7 wherein the rear unit includes a rear light between the right and left indicators of that unit.

9. A lighting system according to any one of claims 5 to 8, wherein the at least one control comprises a plurality of controls, and at least one of the plurality of controls is arranged to activate at least one light of each of the front and rear units.

10. A lighting system according to any one of the preceding claims, wherein the at least one control comprises a plurality of controls, a first one of said controls is arranged to activate the or one of said lights of the front unit and a second one of said controls is arranged to activate the or one of said lights of the rear unit.

11. A lighting system according to any one of the preceding claims wherein the front unit has a brake sensor connectable to the braking system of the bicycle, the brake sensor being connected via the electrical circuitry of the front unit to the transmitter, whereby the at least one light of the rear circuit is activated by the brake sensor.

12. A lighting system according to any one of the preceding claims, further including an audio alarm.

13. A bicycle lighting system comprising:
a casing,
a plurality of lights,
at least one control for activating the lights, and
one electrical circuitry connecting the lights and the at least one control,
wherein the lights define left and right indicators selectable by the control, and the lights and electrical circuitry are contained in the housing.
